# EUROPÄISCHE PATENTSCHRIFT

(11) **EP 1 388 396 B1**
(45) Veröffentlichungstag und Bekanntmachung des Hinweises auf die Patenterteilung: **03.11.2010**
(21) Anmeldenummer: 03016459.4
(22) Anmeldetag: 22.07.2003
(51) Int. Cl.: B25J 9/16, G05B 19/418

(54) **Verfahren und Vorrichtung zum Steuern von Handhabungsgeräten**
Method and device for controlling manipulators
Procédé et dispositif de commande de manipulateurs

(30) Priorität: 08.08.2002 DE 10236392
(43) Veröffentlichungstag der Anmeldung: 11.02.2004
(73) Patentinhaber: KUKA Roboter GmbH, 86165 Augsburg (DE)
(72) Erfinder: Graf, Stefan, 86637 Zusamaltheim (DE)
(74) Vertreter: Lempert, Jost

(56) Entgegenhaltungen:
- EP-A- 1 385 071
- EP-A2- 1 186 386
- WO-A-01/71878
- DE-A1- 3 416 227
- US-A- 5 204 942

## Beschreibung

Die Erfindung betrifft ein Verfahren zum synchronen Steuern einer Mehrzahl von Handhabungsgeräten, wie Industrierobotern. Sie betrifft weiterhin eine Vorrichtung zum synchronen Steuern eines Handhabungsgeräts in einem Verbund aus einer Anzahl derartiger Handhabungsgeräte, das zum Durchführen eines Verfahrens der eingangs genannten Art ausgebildet ist.

Automatisierte Handhabungsgeräte, wie Industrieroboter, werden in der heutigen industriellen Praxis für vielfältige Aufgaben eingesetzt. Dabei ist es oftmals erforderlich, dass mehrere Roboter, die jeweils durch eine Robotersteuerung gesteuert sind, bestimmte Handhabungs-Handlungen zeitlich aufeinander abgestimmt, d.h. synchron ausführen. Dazu ist in der Regel erforderlich, dass bestimmte Bedienhandlungen an einer Mehrzahl von Roboter-Steuerungen gleichzeitig ausgeführt werden. Es kann sich bei den erwähnten Bedienhandlungen beispielsweise um das Verteilen eines Start-Kommandos für eine Gruppe kooperierender Roboter handeln.

Darüber hinaus ist die Ausführung bestimmter Befehle regelmäßig an Zustandbedingungen geknüpft, die an allen Steuerungen erfüllt sein müssen, bevor ein bestimmtes Steuerbefehls bzw. durch dieses eingeleitete Programmanweisungen von einer Mehrzahl von Roboter-Steuerungen synchron ausgeführt werden kann bzw. können.

Aus der US 2002/0029095 A1 (entsprechend EP 1 186 386 A2) ist eine synchrone Steuerung kooperierender Roboter bekannt, bei der eine Roboter-Steuerung als Master und weitere Roboter-Steuerungen als Slaves fungieren. Die Master-Steuerung sendet Start-Kommandos und Positions- sowie Interpolationsdaten an alle Slaves, die nach erfolgter Rückmeldung daraufhin bezüglich eines Startzeitpunktes synchrone Bewegungs- bzw. Steuerungsabläufe ausführen. Im Falle eines Stop-Kommandos eines der kooperierenden Roboter werden alle beteiligten Roboter nach einem identischen Anhalteverfahren abgebremst.

Als nachteilig bei der vorbekannten Steuerung ist insbesondere das starre Master-Slave-Konzept anzusehen, nach dem zu Beginn eines Ablaufvorgangs einer der Roboter als Master für diesen Ablaufvorgang festgelegt wird. Hierdurch ist die Einsetzbarkeit einer derartigen Steuerung stark eingeschränkt: Alle beteiligten Roboter-Steuerungen enthalten eine Vielzahl distinkter Steuerungsprogramme (Master-Programm, Slave-Programm, Normal-Programm), deren Zusammenspiel vorab festgelegt sein muss, und die einen erhöhten Programmier- und Verwaltungsaufwand sowie einen entsprechenden Speichermehraufwand nach sich ziehen. Weitere Nachteile ergeben sich aufgrund der in der angeführten Druckschrift genannten datentechnisch aufwendigen und anfälligen Übermittlung umfangreicher Positions- und Interpolationsdaten, die dort für eine synchrone Steuerung notwendig ist.

Der Erfindung liegt die Aufgabe zugrunde, unter Vermeidung der vorstehend genannten Nachteile ein Verfahren oder eine Vorrichtung zum synchronen Steuern einer Mehrzahl von Handhabungsgeräten, wie Industrierobotern, zu schaffen, das bzw. die bei Gewährleistung eines sicheren Verfahrensablaufes einfach ausgebildet und flexibel einsetzbar ist.

Die Aufgabe wird bei einem Verfahren der eingangs genannten Art dadurch gelöst, dass ein von Steuerungen der an einer Synchronisation beteiligten Handhabungsgeräte auszuführender Steuer-Befehl an einer beliebigen Steuerung initiiert und anschließend in dieser abhängig von der Art des Befehls weiterbearbeitet wird. Zur Lösung der genannten Aufgabe ist bei einer Steuerungsvorrichtung der eingangs genannten Art vorgesehen, dass diese aufweist: Speichermittel zum Speichern eines Steuerungsprogramms für das Handhabungsgerät, Eingabemittel zum Initiieren eines zu Synchronisationszwekken zu verteilenden Steuer-Befehls, Sendemittel zum Senden eines initiierten Steuerbefehls an andere an einer Synchronisation beteiligte Steuerungen, Empfangsmittel zum Empfangen eines von einer anderen beteiligten Steuerung übermittelten Befehls, Prozessormittel zum Bearbeiten des Steuerungsprogramms nach Maßgabe des Steuer-Befehls und ggf. zum Prüfen des initiierten bzw. des empfangenen Befehls sowie Entscheidungsmittel zum Freigeben oder Blockieren des Versandes und/oder zum Anordnen eines lediglich lokalen Ausführens eines initiierten Steuer-Befehls.

Auf diese Weise ist ein einfaches und flexibel einsetzbares Verfahren bzw. eine entsprechende Vorrichtung zum synchronen Steuern einer Mehrzahl von Handhabungsgeräten geschaffen, das bzw. die insbesondere ohne eine Einteilung der beteiligten Steuerungen in Master- und Slave-Steuerungen und die damit verbundenen Nachteile auskommt. Eine flexibel veränderliche Anzahl von Steuerungen kann so als Gruppe (Verbund) mittels bestimmter Steuer-Kommandos synchron gesteuert werden. Dabei ist eine Liste von Steuerungen, die an diesem Verbund teilnimmt, vorzugsweise über eine in den Speichermitteln der Steuerungen gespeicherte Variable in Form einer Liste definiert. Eine solche Variable ist durch den Anwender auch online jederzeit neu definierbar.

Da nach einer Weiterentwicklung des erfindungsgemäßen Steuersystems vorgesehen ist, dass die Steuerungen über ein Kommunikationsnetz, beispielsweise unter Verwendung des Ethernet-Protokolls, verbunden sind, enthält die Steuerungs-Liste vorzugsweise die IP-Adressen der an der Synchronisation beteiligten Steuerungen.

Das Kommunikationsnetz ist vorzugsweise hierarchisch flach, z.B. mit Sterntopologie und zentralem Hub ausgebildet. Alle Steuerungen sind somit auf einer gemeinsamen hierarchischen Ebene angeordnet.

Vorzugsweise beinhaltet die Befehls-Bearbeitung im Zuge des erfindungsgemäßen Verfahrens, dass der Steuer-Befehl zur synchronen Ausführung auf die anderen Steuerungen verteilt oder zunächst lokal überprüft wird.

Nach einer Weiterbildung des erfindungsgemäßen Verfahrens ist vorgesehen, dass die Steuerungen sich vor Bearbeitung der Steuer-Befehls gegenseitig ihre aktuellen steuerungsrelevanten Zustände mitteilen. Auf diese Weise kann die initiierende Steuerung nach einer bevorzugten Ausgestaltung des erfindungsgemäßen Verfahrens die übermittelten Zustände aller Steuerungen überprüfen. Die Prüfung durch die initiierende Steuerung erfolgt unter dem Gesichtspunkt, ob alle Vorbedingungen, die an eine Verteilung bzw. Ausführung eines bestimmten Steuerbefehls geknüpft sind, auf allen Steuerungen erfüllt sind. Eine solche Bedingung ist beispielsweise, dass kein beteiligter Roboter in einem Handverfahren bewegt sein darf.

Nach einer Weiterbildung des erfindungsgemäßen Verfahrens ist vorgesehen, dass die Befehls-Bearbeitung nach der Zustands-Überprüfung erfolgt. Vorzugsweise unterbleibt die Befehls-Bearbeitung bei negativer Zustands-Überprüfung.

Bedingt dadurch, dass ein Befehl erfindungsgemäß ggf. nur lokal ausgeführt wird, können bestimmte Steuer-Befehle auch ohne Synchronisation bei demjenigen Handhabungsgerät ausgeführt werden, an dem sie ursprünglich initiiert wurden.

Eine Weiterbildung des erfindungsgemäßen Verfahrens sieht vor, dass die Zustands-Mitteilung nach einer Anfrage durch die initiierende Steuerung erfolgt. Auf diese Weise wird das Kommunikationsnetz zwischen denn Steuerungen nur zum Initiationszeitpunkt des Steuer-Befehls mit Zustands-Mitteilungen belastet.

Um die Steuerung von Robotern, die in einer Zelle kooperieren, d.h. sich immer oder teilweise räumlich und/oder zeitlich koordiniert miteinander bewegen, möglichst einfach und bedienerfreundlich zu gestalten, ist die erfindungsgemäße Vorrichtung vorzugsweise zusammen mit den anderen Steuerungen mit einem gemeinsamen Bediengerät für die Steuerungen verbunden, das auf die unterschiedlichen Steuerungen umschaltbar ist. Damit kann eine Bedienperson von einer zentralen Bedieneinheit her Steuer-Befehls an bestimmten Steuerungen kooperierender Handhabungsgeräte initiieren und auf diese Weise den Roboter-Verbund einfach und flexibel von außen steuern.

Weitere Vorteile und Merkmale der Erfindung ergeben sich aus der nachfolgenden Beschreibung von Ausführungsbeispielen anhand der Zeichnungen. Es zeigt:
- Fig. 1: ein Blockschaltbild eines Verbundes erfindungsgemäßer Steuerungsvorrichtungen.
- Fig. 2: ein erstes Ablaufdiagramm des erfindungsgemäßen Steuerungsverfahrens anhand des Starts eines Roboterverbundes; und
- Fig. 3: ein weiteres Ablaufdiagramm des erfindungsgemäßen Steuerungsverfahrens in Fortsetzung des Ablaufdiagramms der Fig. 2;

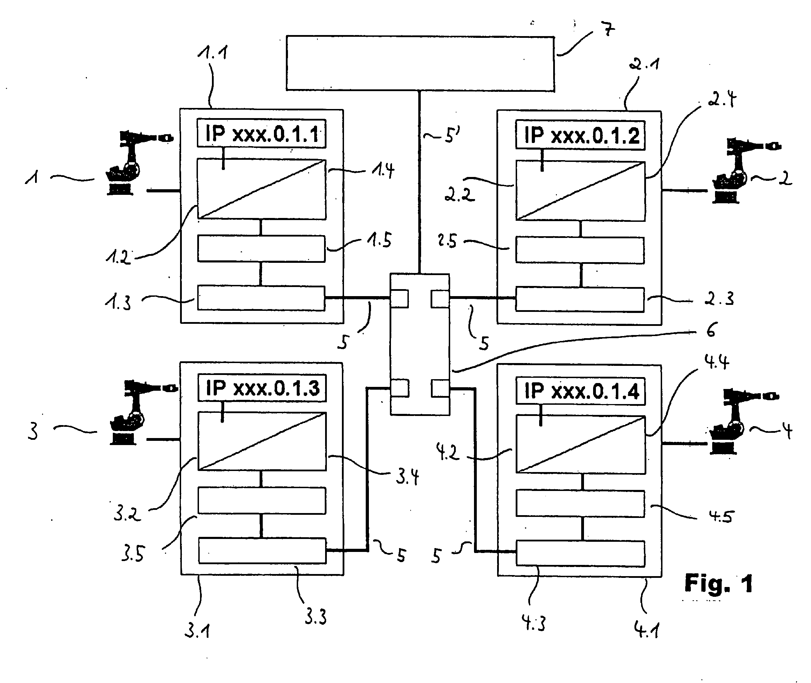

Fig. 1 zeigt eine Anzahl von Robotern 1, 2, 3, 4, die in einem gemeinsamen Arbeitsbereich (Zelle) kooperieren, d.h. sich immer oder teilweise räumlich und/oder zeitlich koordiniert miteinander bewegen. Jeder Roboter 1 2, 3, 4 weist eine Roboter-Steuerung 1.1, 2.1., 3.1, 4.1 auf. Jede Steuerung 1.1, 2.1, 3.1, 4.1 weist auf: Speichermittel 1.2, 2.2, 3.2, 4.2 zum Speichern eines Steuerungsprogramms für den jeweiligen Roboter 1, 2, 3, 4; Eingabemittel 1.3a, 2.3a, 3.3a, 4.3a zum Initiieren eines zu Synchronisierungszwecken zu verteilenden Steuer-Kommandos; Sendemittel 1.3b, 2.3b, 3.3b, 4.3b zum Senden eines initiierten Kommandos an andere an einer Synchronisation beteiligte Steuerung 1.1-4.1; Empfangsmittel 1.3c, 2.3c, 3.3c, 4.3c zum Empfangen eines von einer anderen beteiligten Steuerung 1.1-4.1 übermittelten Kommandos; Prozessormittel 1.4a, 2.4a, 3.4a, 4.4a zum Bearbeiten des Steuerungsprogramms nach Maßgabe des Steuer-Kommandos und ggf. zum Prüfen des initiierten bzw. des empfangenen Kommandos; und Entscheidungsmittel 1.4b, 2.4b, 3.4b, 4.4b zum Freigeben oder Blockieren des Versandes und/oder zum Anordnen eines lediglich lokalen Ausführens eines initiierten Steuer-Kommandos.

Die Eingabemittel 1.3a-4.3a, Sendemittel 1.3b-4.3b und Empfangsmittel 1.3c-4.3c sind beim gezeigten Ausführungsbeispiel der Fig. 1 für jede der Steuerungen 1.1-4.1 in baulich-kombinierter Form als Netzwerkkarte 1.3-4.3 realisiert. Über die Netzwerkkarten 1.3-4.3 sind die Steuerungen 1.1-4.1 durch Leitungen 5 und einen zentralen Hub 6 über ein Netz mit Sterntopologie miteinander verbunden. Der Hub 6 kann als einfacher passiver Hub oder als Switching-Hub (Switch) ausgebildet sein.

Zum Ansteuern der Netzwerkkarten 1.3-4.3 beinhaltet jede der Steuerungen 1.1-4.1 beim gezeigten Ausführungsbeispiel geeignete Treibermittel 1.5, 2.5, 3.5, 4.5.

Die Prozessormittel 1.4a, 2.4a, 3.4a, 4.4a und die Entscheidungsmittel 1.4b, 2.4b, 3.4b, 4.4b sind beim gezeigten Ausführungsbeispiel als bauliche Einheit in Form eines Mikroprozessors 1.4, 2.4, 3.4, 4.4 realisiert.

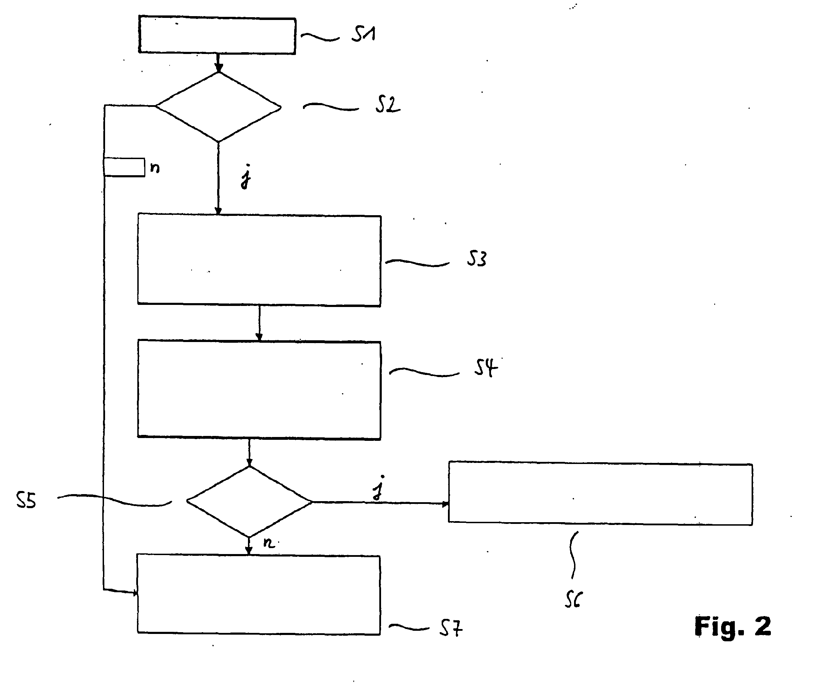

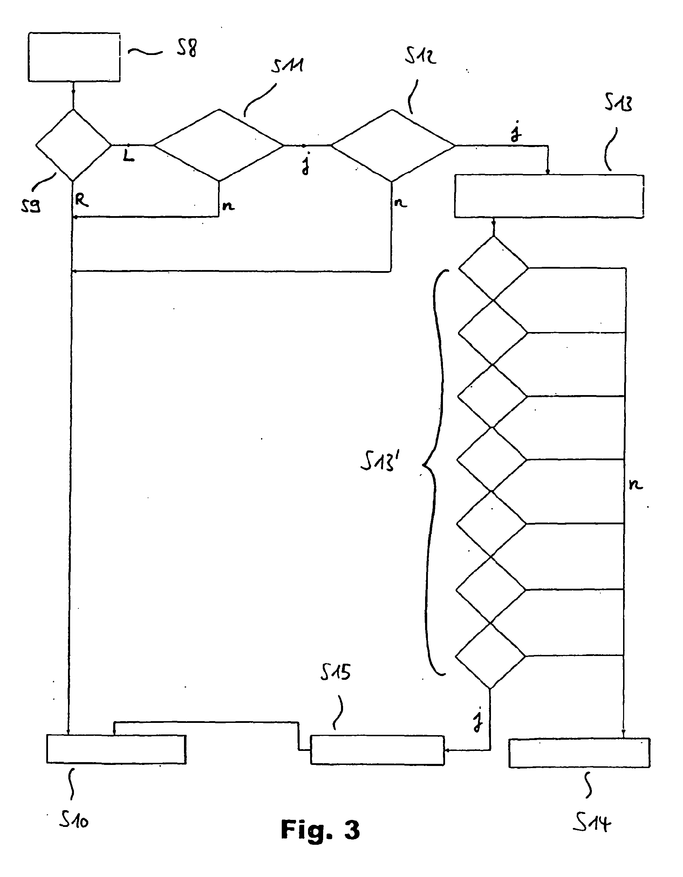

Das in Fig. 1 dargestellte erfindungsgemäße Steuerungssystem weist darüber hinaus zur Steuerung aller Roboter 1-4 einer Zelle ein gemeinsames Bediengerät 7 auf, das auf die unterschiedlichen Steuerungen 1.1-4.1 umschaltbar ist. Nahezu ist das Steuergerät 7 beim gezeigten Ausführungsbeispiel über eine weitere Leitung 5' in das Kommunikationsnetz der Roboter 1-4 eingebunden (mit dem Hub 6 verbunden). Der Anwender kann mittels des Bediengerätes 7, beispielsweise in Form eines Mikrocomputers, auf die Steuerungen 1.1-4.1 der in der Zelle enthaltenen Roboter 1-4 einwirken, wie dies im Rahmen der folgenden Erläuterung der Fig. 2 und 3 erläutert wird.

Die Fig. 2 beschreibt nun den Ablauf des erfindungsgemäßen Verfahrens zum synchronen Steuern einer Mehrzahl von Handhabungsgeräten gemäß der Fig. 1.

Bei einem Steuer-Befehl, der mit einer Zustands-Abfrage und -Überprüfung der anderen beteiligten Steuerungen durch die initiierende Steuerung einhergeht, kann es sich dabei beispielsweise um einen Start-Befehl handeln, durch den ein ganzer Roboter-Verbund aus mehreren kooperierenden Robotern ggf. - d.h. sofern keine Ausschlussgründe wie Handfahrbetrieb oder ähnliches vorliegen - synchron zum Ausführen bestimmter Arbeits- bzw. Bewegungstätigkeiten nach Maßgabe bestimmter in den einzelnen Robotersteuerungen gespeicherter Programme veranlasst wird.

Dazu ergeht in einem ersten Schritt S1 der Start-Befehl an die initiierende Steuerung, im folgenden auch als lokale Steuerung bezeichnet wird. Ein solcher Steuer-Befehl wird in der Regel durch eine Bedienperson von außen veranlasst, wie weiter unten anhand der Fig. 3 erläutert ist. Dies kann prinzipiell an jeder Steuerung geschehen, die dann für den gegebenen Befehl die Rolle der initiierenden Steuerung übernimmt (so kann z.B. ein an einer ersten Steuerung erteilter Start-Befehl an einer zweiten wieder gestoppt werden). Anschließend erfolgt beim Schritt S2 eine Abfrage, ob ein Roboter-Verbund, in diesem Fall ein Start-Verbund, projektiert ist. Die lokale Steuerung beantwortet die Abfrage S2 durch Inspektion einer entsprechenden gespeicherten Variablen, in der eine Liste, beispielsweise eine Liste von IP-Adressen der ggf. an dem Verbund beteiligten Steuerungen abgelegt ist. Wird die Abfrage S2 bejaht (j), so sendet die lokale Steuerung beim Schritt S3 eine Anfrage an alle im Verbund stehenden Roboter, um die jeweiligen Zustände der Roboter zu erfragen. Beim Schritt S4 werden die Antworten der angefragten Roboter empfangen. Die Antwort-Datenpakete enthalten jeweils Informationen bezüglich der aktuellen Programm- und physikalischer Roboterzustände.

Parallel zum Warten auf die Antwort-Datenpakete wird beim Schritt S5 eine Timeout-Zeit für die zu empfangenden Antworten der angefragten Roboter überprüft. Dementsprechend erfolgen die Schritte S4, S5 in der Regel wiederholt abwechselnd in Form einer Schleife (hier aus Übersichtlichkeitsgründen nicht dargestellt). Wird die Antwortzeit überschritten (j), so ergeht dann beim Schritt S6 eine Meldung an den Anwender, dass die Zustände der anderen bzw. bestimmter anderer Steuerungen nicht gelesen werden konnten, wodurch ein Abbruch des beim Schritt S1 gegebenen Start-Kommandos bedingt ist. Liegt beim Schritt S5 keine Überschreitung der Antwortzeit vor (n), so erfolgt beim Schritt S7 eine Weiterbearbeitung des Start-Kommandos, wie weiter unten anhand der Fig. 3 dargestellt ist.

Der letztgenannte Verfahrensschritt S7 wird auch dann ausführt, wenn bei der anfänglichen Abfrage S2 kein Start-Verbund festgestellt wurde (n), also der in Schritt S1 bewirkte Befehl aufgrund der Auswahl am Bediengerät nur für eine Roboter-Steuerung und damit einen Roboter gelten soll.

Die Fig. 3 stellt des prinzipiellen Ablauf für das Versenden eines Start-Befehls an weitere an einer Synchronisation beteiligte Steuerungen und der Zustands-Überprüfung dar.

Der Start-Befehl ist beim Schritt S8 grundsätzlich zur Weiterleitung an die anderen zu synchronisierenden Steuerungen freigegeben (vergleiche S7 in Fig. 2). Es erfolgt beim Schritt S9 zunächst eine Abfrage bezüglich der Startart. Hier sind zwei mögliche Startarten zu unterscheiden: a) Ein Remote-Start R, bei dem der Steuer-Befehl im Schritt S8 nicht lokal initiiert wurde, sondern bereits von einer anderen Steuerung stammt (dieser Fall wird im weiteren Verlauf der Fig. 3 detailliert erläutert). In diesem Fall ergeht direkt beim Schritt S10 der Start-Befehl an die lokale Steuerung. b) Anderenfalls ergibt die Abfrage S9, dass es sich um eine lokal initiierte Anweisung L handelt. In diesem Fall erfolgt beim Schritt S11 eine Abfrage, ob die eigene lokale Steuerung sich innerhalb des Start-Verbundes befindet. Ein Verneinen (n) der Abfrage S11 bedingt wiederum die direkte Startanweisung an die lokale Steuerung beim Schritt S10. Wird dagegen die Abfrage S11 bejaht (j), so erfolgt eine weitere Abfrage S12, ob die eigene lokale Steuerung Satzkoinzidenz (SAK) aufweist, d.h., dass sich der zugehörige Roboter geometrisch auf der programmierten Bahn und nicht außerhalb derselben befindet. Ein Verneinen (n) dieser Abfrage bedingt wiederum Schritt S10, ein Bejahen (j) startet beim Schritt S13, S13' eine Überprüfung aller Steuerungen im Start-Verbund auf der Grundlage der von ihnen übermittelten Abfrageergebnisse (vergleiche Fig. 1) in Bezug auf:
- Satzkoinzident (SAK) ;
- Nicht-Blockierung des Starts;
- Fehlen einer Stop-Meldung;
- automatischen Betriebsmodus (kein Handverfahren) ;
- Bereitschaft des Roboters;
- gleiche Betriebsart wie die anderen Steuerungen, z.B. Step-Modus oder dergleichen; und
- ggf. weitere Startvoraussetzungen.

Ist eine dieser Voraussetzungen bei S13' nicht gegeben (n), so wird der Start beim Schritt S14 global blockiert und eine entsprechende Fehlermeldung an den Anwender ausgegeben. Globales Blockieren des Start-Befehls bedeutet, dass weder ein Programmablauf in der lokalen Steuerung gestartet, noch der Start-Befehl an die anderen beteiligten Steuerungen weitergeleitet wird.

Sind dagegen alle Startvoraussetzungen S13' gegeben (j), so leitet die lokale Steuerung den Start-Befehl beim Schritt S15 an alle im Verbund stehenden Roboter weiter. Abschließend ergeht beim Schritt S10 die Startanweisung auch an die lokale Steuerung, woraufhin im Roboterverbund ein synchroner Programmablauf beginnt.

Wie anhand des Startvorgangs kooperierender Roboter erläutert, sind in gleicher Weise weiterhin die folgenden Steuerungsvorgänge gemeinsam an mehreren Robotern eines Verbundes durchführbar:
- zeitgleiches Stoppen aller kooperierenden Steuerungen 1.1-4.1; und
- Abgleichen eines Programm-Bearbeitungsmodus' auf allen Steuerungen 1.1-4.1. Damit ist gewährleistet, dass sich im Falle eines Step-Modus' auf einer Steuerung sich auch die anderen Steuerungen in demselben Betriebsmodus befinden.
- Ein Programm-Reset führt zu einem eben solchen Reset auf den anderen Steuerungen.
- Bei Satzanwahl auf einer Steuerung, d.h. Anwahl einer bestimmten geometrischen Position des Roboters wird die entsprechende Satzanwahl auf den anderen Steuerungen ebenfalls durchgeführt.

Die letzte der genannten synchronen Bedienhandlungen setzt voraus, dass die in den Steuerungen 1.1-4.1 ablaufenden Programme prinzipiell identisch (gespiegelte Programme) sind.

Die Liste von Steuerungen, die an einem Verbund der Anwenderaktionen teilnimmt, ist beim beschriebenen Ausführungsbeispiel in einer Variablen abgelegt, die in den Speichermitteln 1.2-4.2 der kooperierenden Roboter-Steuerungen 1.1-4.1 gespeichert ist. Für die Aktivierung der vorstehend genannten Befehle "synchrone Satzanwahl" und "Reset" kann in den Speichermitteln 1.2-4.2 eine entsprechende zweite Variable gespeichert sein.

Alle dem Kommando-Verbund zugehörigen Steuerungen 1.1-4.1 teilen sich gegenseitig ihre aktuell relevanten Zustände mit, wobei das in Fig. 1 dargestellte Kommunikationsnetz 5, 6 auf Ethernet-Basis zwischen den Steuerungen 1.1-4.1 als Kommunikationsmedium dient. Bei Einleitung eines entsprechend zu verteilenden Steuer-Befehls an einer der Steuerungen durch einen Benutzer über das Bediengerät 7 wird gemäß des anhand der Fig. 2 und 3 beschriebenen Verfahrens überprüft, ob in Anbetracht der Zustände der anderen im Verbund stehenden Steuerungen der gegebene Befehl in dieser Form verteilt, abgeblockt oder nur lokal ausgeführt wird. Für letzteres ist gegebenenfalls ein Auflösen des projektierten Verbunds erforderlich, denn grundsätzlich wird die Kommandoführung für alle Teilnehmer blockiert, falls eine projektierte Synchronisation fehlschlägt. Will der Anwender also die lokale Kommandoführung erzwingen, so löst er den projektierten Verbund auf, so dass alle Kommandos nur noch lokal ausgeführt werden.

Die auf diese Weise synchronisierbaren Anweisungen umfassen insbesondere Start- und Stop-Befehls, Auswahlbefehle für die Programmlaufart (Step-Modus oder dergleichen), Satzanwahl- und Programm-Reset-Befehle. Die Erfindung betrifft hierbei das gemeinsame Starten, Stoppen von Steuerungsprogrammen. Dies bedeutet nicht zwangsläufig, dass die Bewegungen der Roboter geometrisch gekoppelt sind bzw. sein müssen - es bedeutet lediglich, dass die gleiche Bedienhandlung auf mehreren Steuerungen ausgeführt wird, ohne dass der Anwender an allen Bediengeräten einen entsprechenden Befehl initiieren muss, um die Bedienhandlung zu tätigen.

Für diesen Datenaustausch sind keine Positionsdaten erforderlich, sondern nur Daten über die aktuellen Zustände (Antriebe ein, SAK, Stop-Meldungen liegen an, oder dergl.). Sollte die beschriebene Funktionalität auch für den gemeinsamen Start einer geometrisch gekoppelten Bewegung mehrerer Steuerungen verwendet werden, so müssen für die Funktionalität einer geometrisch/zeitlich gekoppelten Bewegung mehrerer Steuerungen auch Positionsdaten ausgetauscht werden. Diese sind aber nicht für die Startsynchronisation, sondern für die nachgelagerte Bewegungssynchronisation erforderlich.

Die beschriebene Prüfung der Anfangsbedingungen findet nur beim Start-Befehl statt, da für den Start der im Verbund stehenden Roboter 1-4 erreicht werden soll, dass jede Steuerung 1.1-4.1 für sich eine SAK-Fahrt ausführt. Erst wenn alle Steuerungen 1.1-4.1 bzw. die entsprechenden Roboter 1, 2, 3, 4 sich auf der jeweils programmierten Bahn befinden, kann ein Start im Verbund ausgeführt werden.

### Bezugszeichenliste

- 1, 2, 3, 4: Roboter
- 1.1, 2.1, 3.1, 4.1: Steuerung
- 1.2, 2.2, 3.2, 4.2: Speichermittel
- 1.3, 2.3, 3.3, 4.3: Netzwerkkarte
- 1.3a, 2.3a, 3.3a, 4.3a: Eingabemittel
- 1.3b, 2.3b, 3.3b, 4.3b: Sendemittel
- 1.3c, 2.3c, 3.3c, 4.3c: Empfangsmittel
- 1.4, 2.4, 3.4, 4.4: Mikroprozessor
- 1.4a, 2.4a, 3.4a, 4.4a: Prozessormittel
- 1.4b, 2.4b, 3.4b, 4.4b: Entscheidungsmittel
- 1.5, 2.5, 3.5, 4.5: Treibermittel
- 5, 5': Leitung
- 6: Hub
- 7: Bediengerät
- S1-S15: Verfahrensschritt
- j: bejahte Abfrage
- n: verneinte Abfrage
- L: Startart "lokal"
- R: Startart "Remote"

## Patentansprüche

1. Verfahren zum synchronen Steuern einer Mehrzahl von Handhabungsgeräten (1, 2, 3, 4), wie Industrierobotern, wobei nach Initiierung eines Startbefehls an einer zum Zeitpunkt der Initiierung beliebig ausgewählten Steuerung einer Mehrzahl von Handhabungsgerätsteuerungen (1.1, 2.1, 3.1, 4.1) als initiierender Steuerung aufgrund einer gespeicherten Variablen geprüft wird, ob ein Verbund synchronisiert arbeitendes Handhabungsgerät projektiert und bejahendenfalls durch die initiierende Steuerung die Zustände des Handhabungsgeräts des Verbundes erfragt werden, die hierauf mit Informationen über die aktuellen programm- und physikalischen Handhabungsgerätezustände antworten.

2. Verfahren nach Anspruch 1, **dadurch gekennzeichnet, dass** die Befehls-Bearbeitung beinhaltet, dass der SteuerBefehl zur synchronen Ausführung auf die anderen Steuerungen verteilt, abgeblockt oder nur lokal ausgeführt wird.

3. Verfahren nach Anspruch 1 oder 2, **dadurch gekennzeichnet, dass** die initiierende Steuerung aktuelle steuerungsrelevante Zustände aller Steuerungen überprüft.

4. Verfahren nach Anspruch 3, **dadurch gekennzeichnet, dass** die Befehls-Bearbeitung nach der Zustands-Überprüfung erfolgt.

5. Verfahren nach Anspruch 3, **dadurch gekennzeichnet, dass** die Befehls-Bearbeitung bei negativer Zustands-Überprüfung unterbleibt.

6. Verfahren nach einem der Ansprüche 3 bis 5, **dadurch gekennzeichnet, dass** eine Zustands-Mitteilung nach einer Anfrage durch die initiierende Steuerung erfolgt.

7. Verbund von Vorrichtungen zum synchronen Steuern von Handhabungsgeräten, wie Industrierobotern, in einem Verbund aus derartigen Handhabungsgeräten, wobei jede Vorrichtung aufweist:
- Speichermittel (1.2, 2.2., 3.2, 4.2) zum Speichern eines Steuerungsprogramms für das Handhabungsgerät (1, 2, 3, 4);
- Eingabemittel (1.3a, 2.3a, 3.3a, 4.3a) zum Initiieren eines zu Synchronisationszwecken zu verteilenden Initiierungs-Steuer-Befehls zur Abfrage der Zustände der weiteren Handhabungsgeräte des Roboters und/oder der Rückübermittlung von Informationen an die initiierende Steuerung über aktuelle programm- und physikalische Handhabungsgerätezustände;
- Prüfmittel zum Prüfen aufgrund einer gespeicherten Variablen, ob ein Verbund synchronisiert arbeitender Roboter projektiert ist aufgrund eines initiierenden Startbefehls;
- Sendemittel (1.3b, 2.3b, 3.3.b, 4.3b) zum Senden eines initiierten Steuer-Befehls an andere der an einer Synchronisation beteiligten Steuerungen (1.1., 2.1, 3.1, 4.1);
- Empfangsmittel (1.3c, 2.3c, 3.3.c, 4.3c) zum Empfängen eines von einer anderen beteiligten Steuerung (1.1, 2.1, 3.1, 4.1) übermittelten Befehls;
- Prozessormittel (1.4a, 2.4a, 3.4a, 4.4a) zum Bearbeiten des Steuerungsprogramms nach Maßgabe des Steuer-Befehls und gegebenenfalls zum Prüfen des initiierten bzw. des empfangenen Befehls; und
- Entscheidungsmittel (1.4b, 2.3b, 3.4b, 4.4b) zum Freigeben oder Blockieren des Versandes und/oder zum Anordnen eines lediglich lokalen Ausführens eines initiierten Steuer-Befehls.

8. Vorrichtung nach Anspruch 7, **dadurch gekennzeichnet, dass** die Steuerungen (1.1, 2.1, 3.1, 4.1) über ein Kommunikationsnetz (5, 6) verbunden sind.

9. Vorrichtung nach Anspruch 7 oder 8, **dadurch gekennzeichnet, dass** diese auf einer gemeinsamen hierarchischen Ebene mit den anderen beteiligten Steuerungen (1.1, 2.1, 3.1, 4.1) angeordnet ist.

10. Vorrichtung nach einem der Ansprüche 7 bis 9, **dadurch gekennzeichnet, dass** diese zusammen mit den anderen beteiligten Steuerungen (1.1, 2.1, 3.1, 4.1) mit einem gemeinsamen Bediengerät (7) verbunden ist, das zu Bedienzwecken auf die unterschiedlichen Steuerungen (1.1, 2.1, 3.1, 4.1) umschaltbar ist.

11. Vorrichtung nach einem der Ansprüche 7 bis 10, **dadurch gekennzeichnet, dass** die beteiligten Steuerungen in (1.1, 2.1, 3.1, 4.1) einer in den Speichermitteln (1.2, 2.2, 3.2, 4.2) gespeicherten Variablen verzeichnet sind.

## Claims

1. A method for the synchronous control of a plurality of handling devices (1,2,3,4), such as industrial robots, wherein after initiating a run command during initiation time at a random control of a plurality of controls (1.1, 2.1., 3.1, 4.1) of handling devices as an initiating control based on a stored variable it is checked, whether a network of handling devices working synchronized within is projected and if so the conditions of said handling devices of said network are to be retrieved by the initiating control, said handling devices answering subsequently with information on current program and physical conditions of said handling devices.

2. The method according to claim 1, wherein the command processing involves the control command for synchronous implementation to be distributed to the other controls, blocked or only locally implemented.

3. The method according to claim 1 or 2, wherein the initiating control checks current, control-relevant states of all the controls.

4. The method according to claim 3, wherein the command processing takes place after state checking.

5. The method according to claim 3, wherein command processing does not take place in the case of negative state checking.

6. The method according to one of the claims 3 to 5, wherein a state communication takes place following an interrogation by the initiating control.

7. Union of apparatuses for the synchronous control of handling devices, such as industrial robots, in a union of such handling devices, wherein each apparatus has:
- storage means (1.2, 2.2, 3.2, 4.2) for storing a control program for the handling device (1, 2. 3, 4) ;
- input means (1.3a, 2.3a, 3.3a, 4.3a) for initiating an initiating control command to be distributed for the purpose of synchronization for an inquiry of the status of any other handling devices of the robot and/or the rear transmission of information of current program and physical handling device conditions to the initiating control;
- Testing means for testing based on a stored variable, whether a union of synchronized working robots is projected, based on a initiating starting command;
- transmitting means (1.3b, 2.3b, 3.3b, 4.3b) for transmitting an initiated control command to other controls (1.1, 2.1, 3.1, 4.1) participating in a synchronization;
- receiving means (1.3c, 2.3c, 3.3c, 4.3c) for receiving a command transmitted by another participating control (1.1, 2.1, 3.1, 4.1);
- processing means (1.4a, 2.4a, 3.4a, 4.4a) for processing the control command in accordance with the control command and for checking the initated or received command if necessary; and
- decision means (1.4b, 2.4b, 3.4b, 4.4b) for blocking or unblocking the transmission and/or for ordering a solely local implementation of an initiated control command.

8. The apparatus according to claim 7, wherein the controls (1.1, 2.1, 3.1, 4.1) are linked by means of a communication network (5, 6).

9. The apparatus according to claim 7 or 8, wherein it is located on a common hierarchic plane with the other participating controls (1.1, 2.1, 3.1, 4.1).

10. The apparatus according to on of the claims 7 to 9, wherein it is connected together with the other participating controls (1.1, 2.1, 3.1, 4.1) to a common operating device (7), which for operating purposes can be switched to the different controls (1.1, 2.1, 3.1, 4.1).

11. The apparatus according to of the claims 7 to 10, wherein the participating controls (1.1, 2.1, 3.1, 4.1) are listed in a variable stored in the storage means (1.2, 2.2, 3.2, 4.2).

## Revendications

1. Procédé pour commander de façon synchrone une pluralité de manipulateurs (1, 2, 3, 4), tels que des robots industriels, sachant que l'on teste, après le lancement d'un ordre de départ au niveau d'une commande choisie de façon quelconque au moment du lancement parmi une pluralité de commandes de manipulateur (1.1, 2.1, 3.1, 4.1), comme commande de lancement, en raison des variables mémorisées, si une association des manipulateur travaillant de façon synchronisée est projettée une association et si c'est le cas, on interroge les états du manipulateur de l'association à travers la commande lancée, permettant ainsi d'obtenir des informations sur les états actuels physiques et programmés des manipulateurs.

2. Procédé selon la revendication 1, **caractérisé en ce que** le traitement de l'ordre implique que l'ordre de commande soit distribué, bloqué ou exécuté seulement sur le plan local pour l'exécution synchrone avec les autres commandes.

3. Procédé selon la revendication 1 ou 2, **caractérisé en ce que** la commande de lancement contrôle les états propres à la commande actuels de toutes les commandes.

4. Procédé selon la revendication 3, **caractérisé en ce que** le traitement de l'ordre se produit après la vérification de l'état.

5. Procédé selon la revendication 3, **caractérisé en ce que** le traitement de l'ordre n'a pas lieu lorsque la vérification de l'état est négative.

6. Procédé selon l'une quelconque des revendications 3 à 5, **caractérisé en ce qu'**une notification de l'état se produit après une interrogation par l'intermédiaire de la commande de lancement.

7. Association de dispositifs pour commander de façon synchrone des manipulateurs, tels que des robots industriels, dans une association composée de tels manipulateurs, chaque dispositif comprenant :
- des moyens de mémorisation (1.2, 2.2, 3.2, 4.2) pour mémoriser un programme de commande pour le manipulateur (1, 2, 3, 4) ;
- des moyens de saisie (1.3a, 2.3a, 3.3a, 4.3a) pour lancer un ordre de commande de lancement communiqué à des fins de synchronisation, pour interroger les états des autres manipulateurs du robot et/ou pour transmettre par voie de retour des informations à la commande de lancement sur les états actuels programmés et physiques des manipulateurs ;
- des moyens de contrôle pour contrôler, sur la base des variables mémorisées, si une association de robots travaillant de façon synchrone est prévue sur la base d'un ordre de départ déclenchant le lancement ;
- des moyens d'émission (1.3b, 2.3b, 3.3.b, 4.3b) pour envoyer un ordre de commande lancé à d'autres commandes (1.1, 2.1, 3.1, 4.1) participant à une synchronisation ;
- des moyens de réception (1.3c, 2.3c, 3.3.c, 4.3c) pour recevoir un ordre transmis par une autre commande (1.1, 2.1, 3.1, 4.1) impliquée ;
- des moyens de traitement (1.4a, 2.4a, 3.4a, 4.4a) pour traiter le programme de commande conformément à l'ordre de commande et le cas échéant pour contrôler l'ordre lancé et/ou l'ordre reçu ; et
- des moyens de décision (1.4b, 2.3b, 3.4b, 4.4b) pour débloquer ou bloquer l'envoi et/ou pour ordonner l'exécution au seul plan local d'un ordre de commande lancé.

8. Dispositif selon la revendication 7, **caractérisé en ce que** les commandes (1.1, 2.1, 3.1, 4.1) sont réunies via un réseau de communication (5, 6).

9. Dispositif selon la revendication 7 ou 8, **caractérisé en ce que** celui-ci est disposé sur un plan hiérarchique commun avec les autres commandes (1.1, 2.1, 3.1, 4.1) concernées.

10. Dispositif selon l'une quelconque des revendications 7 à 9, **caractérisé en ce que** celui-ci peut être relié, conjointement avec les autres commandes (1.1, 2.1, 3.1, 4.1) concernées, à un appareil de commande (7) commun pouvant être commuté sur différentes commandes (1.1, 2.1, 3.1, 4.1) à des fins de commande.

11. Dispositif selon l'une quelconque des revendications 7 à 10, **caractérisé en ce que** les commandes concernées sont enregistrées dans les variables (1.1, 2.1, 3.1, 4.1) mémorisées dans les moyens de mémorisation (1.2, 2.2, 3.2, 4.2).
